# EUROPEAN PATENT SPECIFICATION

(11) **EP 0 685 662 B1**
(45) Date of publication and mention of the grant of the patent: **02.08.2000**
(21) Application number: 95610029.1
(22) Date of filing: 31.05.1995
(51) Int. Cl.: F16H 25/20

(54) **A linear actuator**
Linearer Stellantrieb
Actionneur à déplacement linéaire

(30) Priority: 31.05.1994 DK 61494
(43) Date of publication of application: 06.12.1995
(73) Proprietor: LINAK A/S, DK-6430 Nordborg (DK)
(72) Inventor: Jensen, Bent, Guderup, DK-6430 Nordborg (DK)

(56) References cited:
- EP-A- 0 577 541
- DE-A- 1 903 239
- US-A- 2 907 189
- US-A- 5 187 993
- US-A- 5 329 657

## Description

The invention relates to a linear actuator comprising the features outlined in the preamble of claim 1 and known from EP-A-577 541.

Linear actuators of the type mentioned above are used for a multitude of operations where a linear movement or power actuation is desired. They are often used where a hydraulic or pneumatic installation would be totally unsuitable and where an electric driving power is to be preferred. Electrically operated doors and hospital beds may be mentioned as examples where the linear actuator is positioned such that the output rod performs the required movement from one position to another as a result of a power supply of one or the other polarity and possibly guided by limit stops.

In practical use a desire to arrive from one extreme position to the other at great speed may arise, or to arrive from a given position to one of the extreme positions or in general to be able to effect an adjustment of the moved unit without being bound to the mechanism of the linear actuator. Doors may be required to close rapidly like fire doors due to the release of safety devices caused by excessive temperatures or a normally closed door must serve as an emergency exit even in the case of a power supply failure. In a hospital bed it might be desirable to achieve a totally horizontal position quickly despite the head of the bed having been raised. In those cases where a power supply is based on batteries, the power transmission will have a high ratio, and it will consequently be relatively slow. The same will apply for linear actuators that must perform a heavy pulling or pushing force by means of the output rod.

Prior art solutions to this return problem have generally been based on toggle link mechanisms that may be released or on locking pins that may be pulled out such that the output rod no longer acts as a bar against movement. These prior art solutions suffer from the severe drawback that the linear actuator may not be brought back to its normal function again until the moved unit has been returned to its pre-released position upon which the releasing mechanism can be reset, for instance by inserting the pulled-out locking pin. Furthermore mechanisms of the type mentioned suffer from the drawback of not allowing passage from one position of the shifted element to another without interaction with the linear actuator and its subsequent random engagement.

From US-A-2907189 is known adetachable coupling comprising
- two independent and successively arranged axially oriented cylindrical coupling members,
- said cylindrical coupling members being enveloped and clamped by a coil spring,
- the coil spring comprising two radially outwards oriented activating pins, which are in engagement with two enveloping and mutually rotatable cylindrical caps, which under normal operating conditions follow the rotation of the coil spring and
- disengagement of said cylindrical coupling members being performed by the mechanical "opening" of the spring by a cross axially and oppositely directed impact on one or both of the protruding activating pins, these two being turned away from one another by a mutual turning of the cylindrical caps.

The object of the invention is to provide a solution to the problem described eliminating the drawbacks that are incurred when applying the prior art solutions. This is achieved by a linear actuator according to the invention as defined by the features of claim 1.

In an embodiment of the invention use is made of a trailing release unit which ideally should be inserted between the spindle and the spindle drive shaft.

The coupling comprises two independent and successively arranged axially oriented cylindrical coupling members that are fixedly attached to the spindle and the spindle drive shaft respectively, said cylindrical parts being enveloped by a coil spring.

The two radially oriented activating pins of the coil spring, preferably an angled endportion thereof, are each in engagement with two enveloping and mutually rotatable activating members which follow the rotation of the coil spring.

The coil spring will in its unloaded postion, by its own initial load and by a rotation impact in one direction, lock itself about the two coupling members and consequently allow a power transmission from one coupling member to the other whereby the motor can pull the spindle.

The disengagement is caused by the coil spring being mechanically "opened" by a cross axially oppositely directed impact on one or both of the two protruding activating pins as these pins each are individually controlled by activating members which being in engagement with one another envelopes the coil spring. The members will by a further compression which is caused by a manually operated lever, by mutually cooperating guiding members, perform a rotation about the shaft relative one another whereby the activating pins of the spring are cross axially displaced and oppositely relative one another. The inner diameter of the coil spring is hereby increased such that its grip round the cylindrical coupling members stops or at least adopts such low friction that the spindle, under an increased pressure from its threaded spindle, can rotate whereby the exposed lever can take up the desired position.

Cooperating with the exposure of the actuator lever, the rotational direction of the drive shaft will tighten the coil spring and hereby transmit the power from the motor. By rotation in the opposite direction the coil spring is "opened" whereby the friction between the coupling members and the coil spring be significantly reduced. The coupling members can hereby rotate comparatively freely. This means that the actuator can be pulled out manually until it reaches its mechanically defined outer limit.

The invention shall be described in further detail referring to the drawing in which:-
Fig. 1 is a lateral view of a complete disengagement unit, and
Fig. 2 is an exploded drawing of a coil spring activating mechanism according to the invention,
Fig. 3 illustrates a longitudinal section through an actuator by means of which the invention may be carried into effect, and
Fig. 4 illustrates a longitudinal section through an actuator with a worm by means of which the invention may be carried into effect.

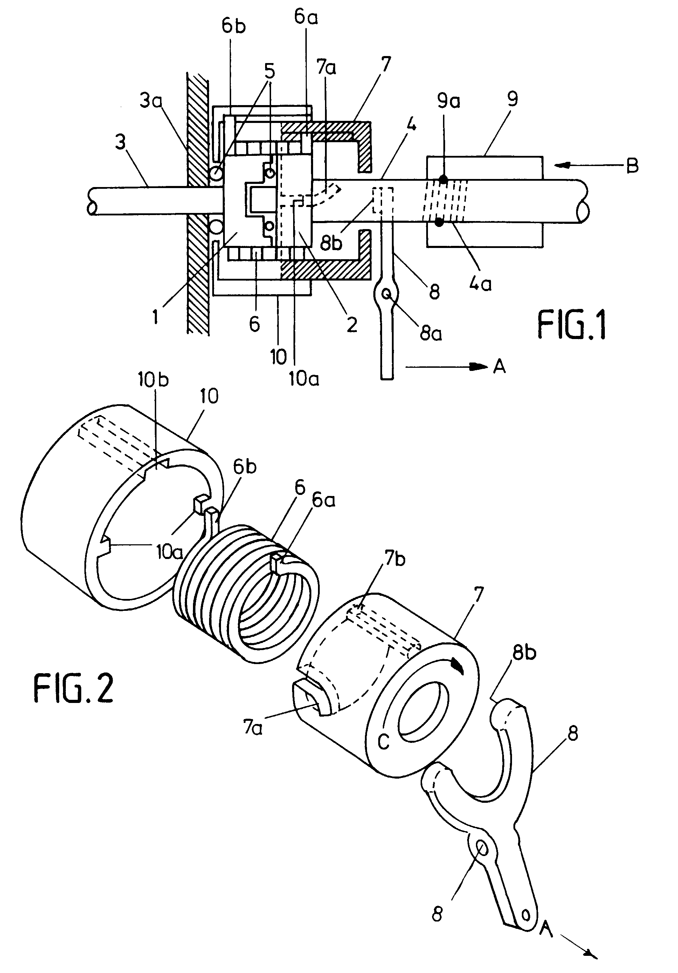

Fig. 1 shows two cylindrical couplings 1 and 2. The cylindrical coupling portion 1 is directly attached to a drive shaft 3, and the coupling portion 2 is fixedly attached to a spindle 4. Between the coupling portions 1 and 2 and behind the coupling portion 1 ball bearings 5 have been inserted to reduce the friction between the coupling portions 1 and 2 and a rear wall 3a for absorbing the pressure being caused in the direction B. The pressure in the direction B, which is caused by an ordinary weight effect to the actuator, is transferred through a threaded bushing 9 and balls 9a that are in engagement with a thread 4a on the spindle 4.

The coupling portions 1 and 2 are enveloped by a coil spring 6 which at each end terminates in upwardly protruding endportions acting as activating pins 6a and 6b. The activating pin 6a is guided by a guiding groove 7b in an enveloping cup-shaped unit 7 being inserted into a larger cup-shaped unit 10 in which a recess 10b has been made to accommodate the activating pin 6b of the coil spring 6.

When using the free edge as a starting point, the unit 7 is provided with two opposed guiding grooves 7a of which one is shown in Fig. 1 and where the other appears in Fig. 2. Corresponding pins 10a are placed inside the unit at the front edge of the cup-shaped unit 10 engaging the guiding grooves 7a on the unit 7. The first portion of the guiding grooves 7a is axially oriented but will swing in the same direction towards a radial orientation further away from the edge.

Releasing the coupling takes place by shifting an activating lever 8 which can be pivoted about a shaft 8a by an impact in the direction A. The activating lever 8 presses at the point 8b to the cap 7 which hereby is moved in the direction B. By this compression the two caps 7 and 10 are rotated about the longitudinal axis relative one another. The activating pin 6a of the coil spring guided by the recess 7b will hereby be rotated in the direction C relative the other activating pin 6b of the coil spring whereby the coil spring "opens". The coupling member 2 can now rotate freely in the coil spring 6 as a result of the previously mentioned impact in the direction B.

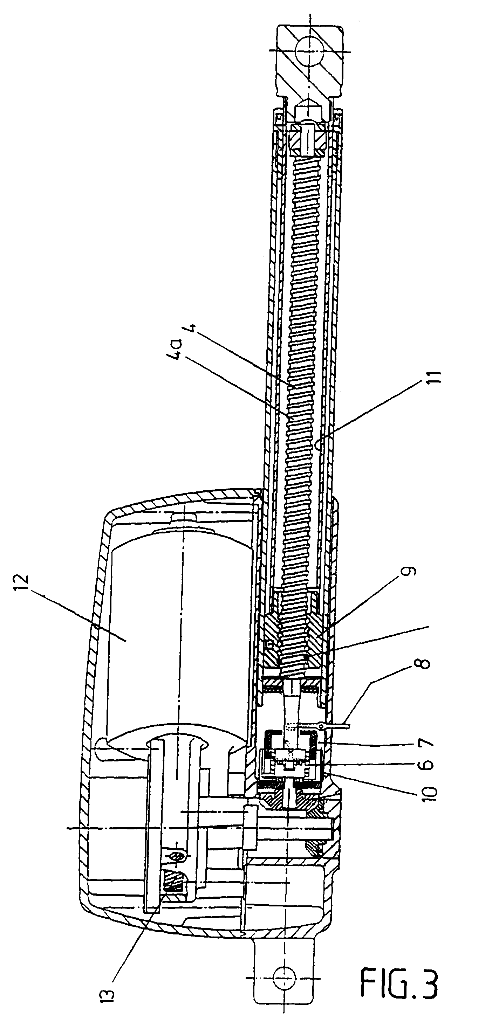

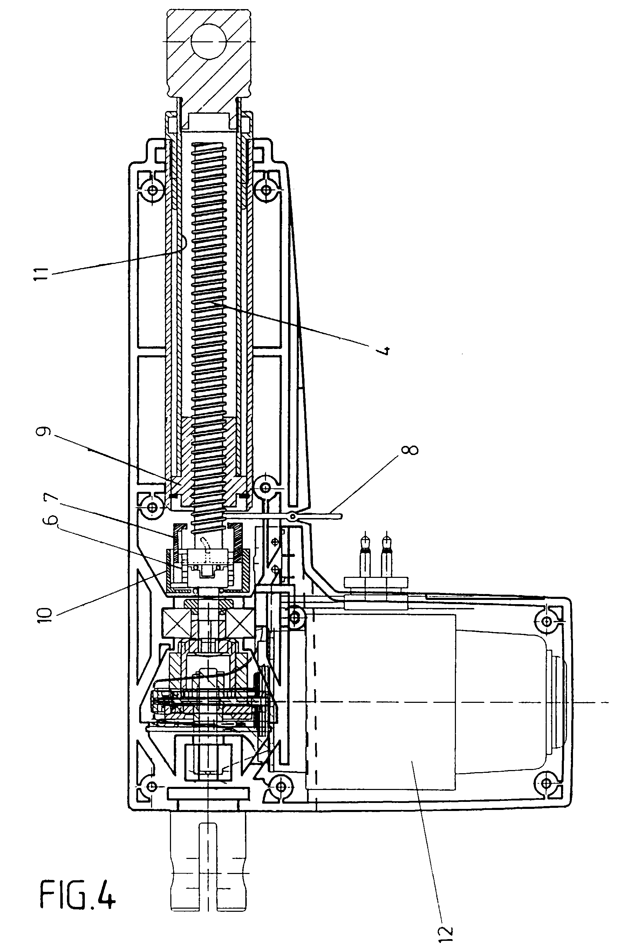

In Fig. 3 of the drawing the invention is shown implemented at an actuator where the spindle is driven via two oblique gear wheels, and in Fig. 4 the invention is shown implemented at an actuator where the spindle is driven via a worm.

## Claims

1. A linear actuator comprising
- a threaded spindle (4) rotatable in either direction,
- a threaded bushing (9) on said spindle that drives an output rod (11), and
- a reversible motor (12) that drives a spindle drive shaft (3) via a power transmission (13), said spindle drive shaft (3) releasably connected with said spindle (4),
- a disengagement unit, having a displacable cap (7) operated by a lever (8), between the spindle (4) and the spindle drive shaft (3) for releasing the power transmission (13) from engagement with the spindle (4),
**characterized by**
- said unit comprising two independent and successively arranged axially oriented cylindrical coupling members (1,2) that are fixedly attached to the spindle drive shaft (3) and the spindle (4) respectively,
- said cylindrical coupling members (1,2) being enveloped and clamped by a coil spring (6),
- the coil spring comprising two radially outwards oriented activating pins (6a,6b), which are in engagement with two enveloping and mutually rotatable cylindrical caps (7,10), which under normal operating conditions follow the rotation of the coil spring and
- disengagement of said cylindrical coupling members (1,2) being performed by the mechanical "opening" of the spring (6) by a cross axially and oppositely directed impact on one or both of the protruding activating pins (6a,6b), these two being turned away from one another by a mutual turning of the cylindrical caps (7, 10) by operating the lever (8).

2. A linear actuator according to claim 1, characterized in that the cylindrical activating cap (10) has pins (10a) cooperating with a track (7a) terminating in a curve in the other cylindrical cap (7) such that these are turned away from one another at compression.

3. A linear actuator according to claim 1 or 2, characterized in that the lever (8) is Y-shaped.

## Patentansprüche

1. Ein Linearantrieb umfassend
- eine mit Gewinde versehene Spindel (4), die in beide Richtungen drehbar ist,
- eine mit einem Gewinde versehene Buchse (9) auf der Spindel, die eine Ausgangsstange (11) antreibt, und
- einen reversiblen Motor (12), der über ein Lastschaltgetriebe (13) einen Spindelantriebsschaft (3) antreibt, wobei der Spindelantriebsschaft (3) lösbar mit der Spindel (4) verbunden ist,
- eine Kupplungseinheit, die zwischen der Spindel (4) und dem Spindelantriebsschaft (3) eine verschiebbare Kappe (7) aufweist, die durch einen Hebelarm (8) betätigt wird, um das Lastschaltgetriebe (13) aus der Verbindung mit der Spindel (4) zu lösen,
dadurch gekennzeichnet, daß
- die Einheit, zwei unabhängige und aufeinanderfolgend angeordnete axial ausgerichtete zylindrische Verbindungselemente (1, 2) umfaßt, die fest an dem Spindelantriebsschaft (3) beziehungsweise der Spindel (4) angebracht sind,
- die zylindrischen Verbindungselemente (1, 2) durch eine Schraubenfeder (6) umhüllt und verkuppelt sind,
- die Schraubenfeder zwei radial nach außen gerichtete Aktivierungsstifte (6a, 6b) umfaßt, die mit zwei einhüllenden und gegenseitig abhängend rotierenden zylindrischen Kappen (7, 10), die unter normalen Betätigungsbedingungen der Drehung der Schraubenfeder folgen, in Eingriff stehen und
- Freikupplung der zylindrischen Verbindungselemente (1,2) durch das mechanische "Öffnen" der Feder (6) durch eine queraxiale und entgegengesetzt gerichtete Einwirkung auf eine oder beide der hervorstehenden Aktivierungsstifte (6a, 6b) durchgeführt wird, wobei diese beiden durch ein gemeinsames Drehen der zylindrischen Kappen (7, 10) durch Betätigen des Hebelarms (8) voneinander weg gedreht werden.

2. Ein Linearantrieb gemäß Anspruch 1, dadurch gekennzeichnet, daß die zylindrische Aktivierungskappe (10) Zapfe (10a) aufweist, die mit einer Spur (7a) zusammenwirken, die in einer Kurve in der anderen zylindrischen Kappe (7) endet, derart, daß diese auf Druck voneinander weg gedreht werden.

3. Ein Linearantrieb gemäß Anspruch 1 oder 2, dadurch gekennzeichnet, daß der Hebelarm (8) Y-förmig ist.

## Revendications

1. Actionneur linéaire comprenant :
- une broche filetée (4) pouvant tourner dans chaque sens ;
- une douille taraudée (9) sur ladite broche, qui entraîne une tige de sortie (11);
- un moteur réversible (12) qui entraîne un arbre (3) d'entraînement de broche via une transmission de puissance (13), ledit arbre (3) d'entraînement de broche étant relié, de façon libérable, à ladite broche (4) ; et
- une unité de désengagement, ayant un capot déplaçable (7) manoeuvré par un levier (8), entre la broche (4) et l'arbre (3) d'entraînement de broche, pour libérer la transmission de puissance (13) de l'engagement avec la broche (4),
caractérisé en ce que :
- ladite unité comprend deux organes d'accouplement cylindriques (1, 2) indépendants et successivement agencés axialement, qui sont liés fixement audit arbre (3) d'entraînement de broche et à la broche (4) respectivement ;
- lesdits organes d'accouplement cylindriques (1, 2) sont enveloppés et serrés par un ressort hélicoïdal (6) ;
- le ressort hélicoïdal comprend deux ergots d'actionnement orientés radialement vers l'extérieur (6a, 6b), qui sont en engagement avec deux capots cylindriques, enveloppants et pouvant tourner mutuellement (7,10) qui, sous des conditions normales de fonctionnement, suivent la rotation dudit ressort hélicoïdal ; et
- le désengagement desdits organes d'accouplement cylindriques (1, 2) est réalisé par l'«ouverture» mécanique du ressort (6) par un effort dirigé en opposition et axialement transversal sur l'un ou les deux ergots d'actionnement en saillie (6a, 6b), ces deux ergots étant tournés au loin l'un de l'autre par une rotation mutuelle des capots cylindriques (7, 10) en manoeuvrant le levier (8).

2. Actionneur linéaire selon la revendication 1,
caractérisé en ce que le capot (10) d'actionnement cylindrique présente des ergots (10a) coopérant avec une rainure (7a) se terminant en courbe dans l'autre capot cylindrique (7), de sorte qu'ils sont tournés au loin l'un de l'autre par compression.

3. Actionneur linéaire selon la revendication 1 ou 2,
caractérisé en ce que le levier (8) est conformé en Y.
